# EUROPÄISCHE PATENTSCHRIFT

(11) **EP 3 059 930 B1**
(45) Veröffentlichungstag und Bekanntmachung des Hinweises auf die Patenterteilung: **06.01.2021**
(21) Anmeldenummer: 15155518.2
(22) Anmeldetag: 18.02.2015
(51) Int. Cl.: H04L 29/12, G05B 19/418

(54) **VERFAHREN ZUR KONFIGURATION EINES KOMMUNIKATIONSGERÄTS EINES INDUSTRIELLEN AUTOMATISIERUNGSSYSTEMS UND KOMMUNIKATIONSGERÄT**
METHOD FOR CONFIGURING A COMMUNICATION DEVICE OF AN INDUSTRIAL AUTOMATION SYSTEM AND COMMUNICATION DEVICE
PROCÉDÉ DE CONFIGURATION D'UN APPAREIL DE COMMUNICATION D'UN SYSTÈME D'AUTOMATISATION INDUSTRIEL ET APPAREIL DE COMMUNICATION

(43) Veröffentlichungstag der Anmeldung: 24.08.2016
(73) Patentinhaber: Siemens Aktiengesellschaft, 80333 München (DE)
(72) Erfinder: Albrecht, Harald, 90475 Nürnberg (DE)

(56) Entgegenhaltungen:
- US-A1- 2008 186 202
- SOOHONG PARK ET AL: "DNS Configuration in IPv6: Approaches, Analysis, and Deployment Scenarios", IEEE INTERNET COMPUTING, IEEE SERVICE CENTER, NEW YORK, NY.- INSTITUTE OF ELECTRICAL AND ELECTRONICS ENGINEERS, US, Bd. 17, Nr. 4, 1. Juli 2013 (2013-07-01), Seiten 48-56, XP011516336, ISSN: 1089-7801, DOI: 10.1109/MIC.2012.96
- JEONG BROCADE/ETRI S PARK SAMSUNG ELECTRONICS L BELOEIL FRANCE TELECOM R&D S MADANAPALLI IRAM TECHNOLOGIES J: "IPv6 Router Advertisement Options for DNS Configuration; rfc6106.txt", IPV6 ROUTER ADVERTISEMENT OPTIONS FOR DNS CONFIGURATION; RFC6106.TXT, INTERNET ENGINEERING TASK FORCE, IETF; STANDARD, INTERNET SOCIETY (ISOC) 4, RUE DES FALAISES CH- 1205 GENEVA, SWITZERLAND, 30. November 2010 (2010-11-30), Seiten 1-19, XP015075838, [gefunden am 2010-11-30]
- T Narten ET AL: "Neighbor Discovery for IP version 6 (IPv6)' RFC: 4861", , 1. September 2007 (2007-09-01), XP055128736, Gefunden im Internet: URL:http://tools.ietf.org/pdf/rfc4861.pdf [gefunden am 2014-07-14]

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung kurzer Datenrahmen mit Echtzeitanforderungen konkurrierend für eine Übermittlung von Datenrahmen mit großem Nutzdateninhalt beansprucht werden. Dies kann zu einer verzögerten Übermittlung der Datenrahmen mit Echtzeitanforderungen oder sogar zu einem Verlust einzelner solcher Datenrahmen führen.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Die ältere europäische Patentanmeldung mit dem Anmeldeaktenzeichen 14166376.5 betrifft ein Verfahren zur Bereitstellung eines Namensdienstes innerhalb eines industriellen Kommunikationssystems, bei dem IPv6-Präfixe durch Router mittels Nachrichten mit Router-Bekanntgaben (Router Advertisements) in jeweils unterlagerten Teilnetzen verbreitet werden. Die Router-Bekanntgaben umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte, also Kommunikationsgeräte ohne Routing-Funktionen, selbständig ihren Gerätenamen. Hierdurch wird eine einfache Inbetriebnahme von Serienmaschinen ermöglicht, da aufgrund oben genannter automatischer Vervollständigung lediglich auf Maschinenebene eindeutige Namen auszuwählen sind.

In der älteren europäischen Patentanmeldung mit dem Anmeldeaktenzeichen 14177262.4 ist ein Verfahren zur Registrierung von Gerätenamen aus einem industriellen Automatisierungssystem bei einem Kommunikationsnetz-Namensdienst beschrieben. Mittels einer Regelbasis wird geräteindividuell festgelegt, für welche Kommunikationsgeräte des industriellen Automatisierungssystems eine Registrierung ihres jeweiligen Gerätenamens beim Kommunikationsnetz-Namensdienst zulässig bzw. erforderlich ist. Mittels geräteseitiger dezentraler Namensdienst-Agenten werden Kommunikationsnetzadressen von Kommunikationsgeräten an einen zentralen Namensdienst-Agenten des industriellen Automatisierungssystems gemeldet. Bei einer zu registrierenden Name-Adress-Zuordnung übermittelt der zentrale Namensdienst-Agent eine die Name-Adress-Zuordnung umfassende Registrierungsanforderung an den Kommunikationsnetz-Namensdienst. Innerhalb des industriellen Automatisierungssystems kann nur der zentrale Namensdienst-Agent Registrierungsanforderungen zur Verarbeitung an den Kommunikationsnetz-Namensdienst übermitteln.

Aus der älteren europäischen Patentanmeldung mit dem Anmeldeaktenzeichen 14184781.4 ist ein Verfahren zur Bereitstellung von Informationen über Kommunikationsgerätenamen innerhalb eines industriellen Automatisierungssystems bekannt. Bei einer Zuweisung bzw. Änderung eines Gerätenamens eines Kommunikationsgeräts wird ein Datagramm mit einer Aktualisierungsanforderung zur Zuordnung seiner Kommunikationsnetzadresse zum geänderten oder zugewiesenen Gerätenamen insbesondere an ausgewählte Kommunikationsgeräte verbreitet. Die ausgewählten Kommunikationsgeräte erzeugen oder ändern auf die Aktualisierungsanforderung jeweils einen dem Kommunikationsgerät mit dem geänderten oder zugewiesenen Gerätenamen zugeordneten Datensatz in ihrer jeweiligen Datenbank. Dabei umfasst der Datensatz die Zuordnung der Kommunikationsnetzadresse zum Gerätenamen.

In der älteren europäischen Patentanmeldung mit dem Anmeldeaktenzeichen 14200562.8 ist ein Verfahren zur Ermittlung von Kommunikationsgeräteadressen innerhalb eines Kommunikationsnetzes eines industriellen Automatisierungssystems beschrieben. Ausgewählten Kommunikationsgeräten des industriellen Automatisierungssystems ist jeweils eine Speichereinheit zugeordnet, in der jeweils zumindest ein Teil von Namensdienst-Informationen temporär gespeichert wird, die durch einen Kommunikationsnetz-Namensdienst bereitgestellt werden. Ein Verbindungsaufbau von einem ersten ausgewählten Kommunikationsgerät zu einem zweiten Kommunikationsgerät wird bei einer auf zumindest das erste und zweite Kommunikationsgerät verteilten Anwendung bzw. Funktion des industriellen Automatisierungssystems anhand der Namensdienst-Informationen gestartet, die in der zum ersten Kommunikationsgerät zugeordneten Speichereinheit gespeichert sind. Die Anwendung bzw. Funktion löst bei einem fehlgeschlagenen Verbindungsaufbauversuch eine zumindest teilweise Aktualisierung der temporär gespeicherten Namensdienst-Informationen aus.

Das Dokument SOOHONG PARK ET AL: "DNS Configuration in IPv6: Approaches, Analysis, and Deployment Scenarios", IEEE INTERNET COMPUTING, IEEE SERVICE CENTER, NEW YORK, NY.- INSTITUTE OF ELECTRICAL AND ELECTRONICS ENGINEERS, US, Bd. 17, Nr. 4, 1. Juli 2013 (2013-07-01), Seiten 48-56, offenbart ein Verfahren zur Bereitstellung eines Namensdienstes innerhalb eines Kommunikationssystems, bei dem IPv6-Präfixe durch Router mittels Nachrichten mit Router-Bekanntgaben (Router Advertisements) in jeweils unterlagerten Teilnetzen verbreitet werden.

In industrielle Automatisierungssysteme mit Serienmaschinen, die jeweils mehrere gleichartige Maschinen innerhalb eines Subnetzes umfassen, ist eine statische Vergabe von Kommunikationsnetzadressen aufwendig und fehleranfällig. Insbesondere wird für jede einzelne Maschine einer Serienmaschine üblicherweise eine eigene Kommunikationsnetzadresse benötigt. Deswegen ist für Automatisierungsgeräte eine selbständige Adresskonfiguration, wie Stateless Address Autoconfiguration (SLAAC), äußerst vorteilhaft. Bei einer selbständigen Adresskonfiguration können Automatisierungsgeräte zuverlässig über ihre logischen Gerätenamen angesprochen werden, die beispielsweise Angaben über technische Funktionen oder räumliche bzw. organisatorische Zuordnungen umfassen. Insbesondere in IPv6-Kommunikationsnetzen müssen bei einer Nutzung von durch ein Domain Name System (DNS) bereitgestellten Namensdiensten mit Aktualisierungsfunktion (Dynamic Update) und selbständig durch Kommunikationsgeräte erzeugten Kommunikationsnetzadressen nach einem Gerätetausch neu bzw. aktualisierte Gerätename-Adress-Zuordnungen durch den jeweiligen Namensdienst registriert werden.

Der vorliegenden Erfindung liegt die Aufgabe zugrunde, ein Verfahren zur Konfiguration von Kommunikationsgeräten innerhalb eines industriellen Automatisierungssystems zu schaffen, das nach einem Gerätetausch eine schnelle und zuverlässige Herstellung einer Konnektivität für ein Ersatz-Kommunikationsgerät ermöglicht, und geeignete Vorrichtungen zur Realisierung des Verfahrens anzugeben.

Diese Aufgabe wird erfindungsgemäß durch ein Verfahren mit den in Anspruch 1 angegebenen Merkmalen und durch ein Kommunikationsgerät mit den in Anspruch 16 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Konfiguration eine Kommunikationsgeräts eines industriellen Automatisierungssystems erzeugt das Kommunikationsgerät aus zumindest einem mittels Routerbekanntgabe-Nachrichten durch zumindest einen innerhalb seines Teilnetzes zugeordneten Router übermittelten Präfix und aus einem geräteindividuellen Schnittstellenidentifikator selbständig eine dem Kommunikationsgerät zugeordnete Kommunikationsnetzadresse. Bei zumindest einem Server eines Namensdienst-Systems fragt das Kommunikationsgerät entsprechend einem Namensauflösungsprotokoll ab, welche Kommunikationsnetzadressen seinem Kommunikationsgerätnamen zugeordnet sind. Das mittels Routerbekanntgabe-Nachrichten übermittelte Präfix kann beispielsweise ein IPv6-Präfix sein, wobei das Kommunikationsgerät seine zugeordnete Kommunikationsnetzadresse vorzugsweise entsprechend Stateless Address Autoconfiguration erzeugt. Darüber hinaus kann das Kommunikationsgerät beispielsweise ein Automatisierungsgerät umfassen oder in ein Automatisierungsgerät integriert sein.

Das Kommunikationsgerät überprüft die beim Server des Namensdienst-Systems abgefragten Kommunikationsnetzadressen erfindungsgemäß auf eine Übereinstimmung mit dem durch den Router übermittelten Präfix. Dementsprechend ordnet sich das Kommunikationsgerät nur die beim Server des Namensdienst-Systems abgefragten Kommunikationsnetzadressen zu, die eine Übereinstimmung mit dem durch den Router übermittelten Präfix aufweisen. Auf diese Weise kann ein neues Kommunikationsgerät nach einem Gerätetausch zuverlässig und schnelle auch unter zuvor für ein ausgetauschtes Kommunikationsgerät verwendeten Kommunikationsnetzadressen angesprochen werden, insbesondere wenn diese Kommunikationsnetzadressen noch in einem Namensdienst-System zu einem logischen Kommunikationsgerätenamen des neuen Kommunikationsgeräts zugeordnet sind. Darüber hinaus kann ein Gerätetausch durch obige Präfix-Überprüfung zuverlässig von einem Geräteumzug unterschieden werden, bei dem üblicherweise eine weitere Nutzung zuvor verwendeter Kommunikationsnetzadressen nicht gewünscht ist.

Das Kommunikationsgerät kann beispielsweise ein Ersatz-Kommunikationsgerät für ein ausgetauschtes Kommunikationsgerät sein, wobei die durch das Ersatz-Kommunikationsgerät beim Server des Namensdienst-Systems abgefragten Kommunikationsnetzadressen zuvor dem ausgetauschten Kommunikationsgerät zugeordnet waren. Im Rahmen eines Gerätetauschs kann das Kommunikationsgerät vorteilhafterweise beim Server des Namensdienst-Systems abfragen, welche Kommunikationsnetzadressen seinem Kommunikationsgerätnamen zugeordnet sind.

Entsprechend einer bevorzugten Ausgestaltung des erfindungsgemäßen Verfahrens ermittelt das Kommunikationsgerät für die beim Server des Namensdienst-Systems abgefragten Kommunikationsnetzadressen eine im Namensdienst-System festgelegte Gültigkeitsdauer (z.B. Time to Live - TTL) einer Zuordnung zwischen seinem Kommunikationsgerätenamen und der jeweiligen Kommunikationsnetzadresse. Nach Ablauf der ermittelten Gültigkeitsdauer hebt das Kommunikationsgerät selbständig seine Zuordnung der jeweiligen Kommunikationsnetzadresse auf. Vorzugsweise hebt das Kommunikationsgerät seine Zuordnung der jeweiligen Kommunikationsnetzadresse erst nach Ablauf eines Vielfachen der ermittelten Gültigkeitsdauer selbständig auf.

Der Server des Namensdienst-Systems kann beispielsweise ein Domain Name System Server sein, der den Namensdienst entsprechend DNS-Protokoll an DNS-Clients bereitstellt. Entsprechend einer weiteren vorteilhaften Ausgestaltung der vorliegenden Erfindung fragt das Kommunikationsgerät bei einem primären bzw. sekundären DNS-Server ab, welche Kommunikationsnetzadressen seinem Kommunikationsgerätnamen zugeordnet sind. Da ein sekundärer DNS-Server vielfach etwas später Name-Adress-Zuordnungen registriert als ein primärer DNS-Server und dementsprechend später aufhebt, kann eine Abfrage bei sekundären DNS-Server vorteilhafterweise noch eine Ermittlung von Name-Adress-Zuordnungen ermöglichen, die auf dem primären DNS-Server schon gelöscht sind. Folglich ermöglicht eine Abfrage bei einem sekundären DNS-Server eine zeitlich weiter zurückreichende Ermittlung von einem ausgetauschten Kommunikationsgerät zugeordneten Kommunikationsnetzadressen, die möglicherweise noch in DNS-Caches anderer Kommunikationsgeräte gespeichert sind und dementsprechend verwendet werden.

Entsprechend einer bevorzugten Ausgestaltung der vorliegenden Erfindung umfasst das Kommunikationsgerät einen DNS-Monitor bzw. DNS-Client, wobei das Kommunikationsgerät mittels des DNS-Monitors bzw. DNS-Clients abfragt, welche Kommunikationsnetzadressen seinem Kommunikationsgerätnamen zugeordnet sind. Vorzugsweise umfasst das Kommunikationsgerät einen Client für dynamisches DNS, mittels dessen es eine Speicherung der Zuordnung seines Kommunikationsgerätenamens zu einer selbständig erzeugten Kommunikationsnetzadresse im Namensdienst-System anfordert. Vorteilhafterweise wird im Namensdienst-System bei einer erfolgreichen Anforderung der Speicherung der Zuordnung des Kommunikationsgerätenamens zur jeweiligen Kommunikationsnetzadresse ein die Zuordnung umfassender Datensatz angelegt. Beispielsweise kann die Kommunikationsnetzadresse eine IPv6-Adresse und der Datensatz ein AAAA Resource Record (RR) sein, der nach Ablauf seiner festgelegten Gültigkeitsdauer aus dem Namensdienst-System gelöscht wird. Vorteilhafterweise führt das Kommunikationsgerät vor einer selbständigen Zuordnung von Kommunikationsgeräteadressen eine Eindeutigkeitsprüfung zumindest innerhalb seines Teilnetzes durch und ordnet sich nur eindeutige Kommunikationsgeräteadressen zu. Dabei führt das Kommunikationsgerät die Eindeutigkeitsprüfung vorzugsweise entsprechend Neighbour Discovery Protocol (DAD) bzw. ICMPv6 (Internet Control Message Protocol for Internet Protocol Version 6) durch.

Das erfindungsgemäße Kommunikationsgerät für ein industrielles Automatisierungssystem ist zur Durchführung eines Verfahrens entsprechend vorangehenden Ausführungen geeignet und umfasst zumindest eine Sende- und Empfangseinheit sowie zumindest eine Steuerungseinheit zur Koordination eines Zugriffs auf ein Kommunikationsmedium. Außerdem ist eine Konfigurationseinheit zur selbständigen Erzeugung einer dem Kommunikationsgerät zugeordnete Kommunikationsnetzadresse aus zumindest einem mittels Routerbekanntgabe-Nachrichten übermittelten Präfix und aus einem geräteindividuellen Schnittstellenidentifikator vorgesehen. Darüber hinaus weist das Kommunikationsgerät eine Überwachungseinheit zur Abfrage bei zumindest einem Server eines Namensdienst-Systems entsprechend einem Namensauflösungsprotokoll auf, welche Kommunikationsnetzadressen einem Kommunikationsgerätnamen des Kommunikationsgeräts zugeordnet sind.

Erfindungsgemäß ist das Kommunikationsgerät dafür ausgestaltet und eingerichtet, dass die die beim Server des Namensdienst-Systems abgefragten Kommunikationsnetzadressen auf eine Übereinstimmung mit dem übermittelten Präfix überprüft werden. Des weiteren ist das Kommunikationsgerät dafür ausgestaltet und eingerichtet, dass es sich nur die beim Server des Namensdienst-Systems abgefragten Kommunikationsnetzadressen zuordnet, die eine Übereinstimmung mit dem durch den Router übermittelten Präfix aufweisen.

Die vorliegende Erfindung wird nahfolgend an einem Ausführungsbeispiel anhand der Zeichnung näher beschrieben. Es zeigt
- Figur 1: ein zwei Teilnetze umfassendes industrielles Automatisierungssystem mit einem Automatisierungsgerät, einem primären DNS-Server und einem sekundären DNS-Server bei einer Inbetriebnahme des Automatisierungsgeräts,
- Figur 2: das Automatisierungssystem gemäß Figur 1 bei einem Austausch des Automatisierungsgeräts,
- Figur 3: das Automatisierungssystem gemäß Figur 1 bei einer Adressbereinigung für das Automatisierungsgerät,
- Figur 4: das Automatisierungssystem gemäß Figur 1 bei einem Umzug des Automatisierungsgeräts in ein anderes Teilnetz.

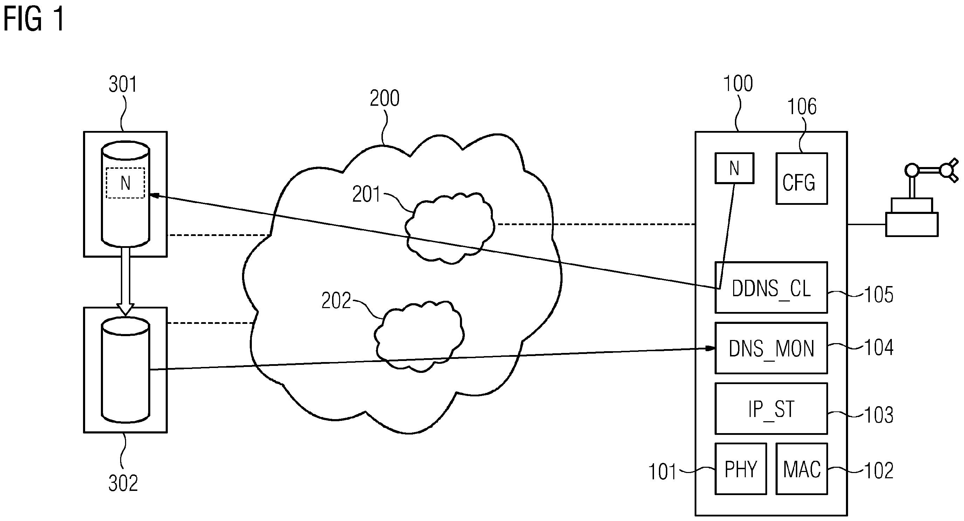

Das Figur 1 dargestellte industrielle Automatisierungssystem umfasst entsprechend dem vorliegenden Ausführungsbeispiel zumindest ein exemplarisches Automatisierungsgerät 100, einen primären Server 301 und einen sekundären Server 302 eines Domain Name System (DNS). Das Automatisierungsgerät 100 und die DNS-Server 301, 302 sind über ein industrielles Kommunikationsnetz 200 miteinander verbunden, das ein erstes Teilnetz 201 und ein zweites Teilnetz 202 umfasst.

Das Automatisierungsgerät 100 kann beispielsweise eine speicherprogrammierbare Steuerung oder ein Feldgerät sein und umfasst im vorliegenden Ausführungsbeispiel ein Kommunikationsgerät. Das Kommunikationsgerät weist eine durch eine PHY-Funktionseinheit realisierte Sende- und Empfangseinheit 101, eine durch eine MAC-Funktionseinheit realisierte Steuerungseinheit 102 zur Koordination eines Zugriffs auf ein Kommunikationsmedium sowie eine Transport- und Vermittlungsfunktionseinheit 103 zur Verarbeitung eines TCP/IP-Protokollstapels. Die Transport- und Vermittlungsfunktionseinheit 103 greift über einen Kommunikationsnetzadapter-Treiber auf die Sende- und Empfangseinheit 101 und die Steuerungseinheit 102 zur Koordination eines Kommunikationsmedium-Zugriffs zu. Auf diese Weise stellt die Transport- und Vermittlungsfunktionseinheit 103 für zumindest ein auf dem Automatisierungsgerät 100 ablaufendes Steuerungsprogramm einen verbindungsorientierten TCP/IP-Transportdient bereit.

Darüber hinaus umfasst das Kommunikationsgerät des Automatisierungsgeräts 100 eine Konfigurationseinheit 106 zur selbständigen Erzeugung einer dem Kommunikationsgerät zugeordnete Kommunikationsnetzadresse. Die Kommunikationsnetzadresse wird im vorliegenden Ausführungsbeispiel entsprechend Stateless Address Autoconfiguration (SLAAC) aus zumindest einem mittels Routerbekanntgabe-Nachrichten bzw. Router Advertisement übermittelten IPv6-Präfix und aus einem geräteindividuellen Schnittstellenidentifikator erzeugt. Der Schnittstellenidentifikator kann beispielsweise aus einer MAC-Adresse abgeleitet werden. Ferner führt die Konfigurationseinheit 106 vor einer selbständigen Zuordnung von Kommunikationsgeräteadressen eine Eindeutigkeitsprüfung innerhalb des jeweiligen Teilnetzes 201, 202 entsprechend Neighbour Discovery Protocol durch, so dass sich das Kommunikationsgerät nur eindeutige Kommunikationsgeräteadressen zuordnet.

Außerdem weist das Kommunikationsgerät eine einen DNS-Client umfassende Überwachungseinheit 104 auf, mittels der das Kommunikationsgerät bei den DNS-Servern 301, 302 entsprechend DNS-Protokoll abfragt, welche Kommunikationsnetzadressen seinem Kommunikationsgerätnamen zugeordnet sind. Auf Basis einer derartigen Abfrage überprüft die Überwachungseinheit 104 die beim primären DNS-Server 301 bzw. sekundären DNS-Server 302 abgefragten Kommunikationsnetzadressen auf eine Übereinstimmung mit dem mittels Router Advertisement übermittelten IPv6-Präfix. Ausgehend von dieser Überprüfung ordnet sich das Kommunikationsgerät nur die bei den DNS-Servern 301, 302 abgefragten Kommunikationsnetzadressen zu, die eine Übereinstimmung mit dem mittels Router Advertisement übermittelten IPv6-Präfix aufweisen. Hierzu übermittelt die Überwachungseinheit 104 ein entsprechendes Überprüfungsergebnis an die Konfigurationseinheit 106, die dann eine Zuordnung zu übernehmender Kommunikationsnetzadressen im Rahmen einer Adress-Auto-Konfiguration umsetzt.

Des weiteren umfasst das Kommunikationsgerät des Automatisierungsgeräts 100 einen DDNS-Client 105 (Dynamic DNS), mittels dessen das Kommunikationsgerät eine Speicherung der Zuordnung seines Kommunikationsgerätenamens zu einer selbständig erzeugten Kommunikationsnetzadresse im Domain Name System anfordert. Bei einer erfolgreichen Anforderung der Speicherung der Zuordnung des Kommunikationsgerätenamens zur jeweiligen Kommunikationsnetzadresse wird für IPv6-Adressen im Domain Name System ein die Zuordnung umfassender AAAA Resource Record angelegt, der nach Ablauf seiner festgelegten Gültigkeitsdauer aus dem Domain Name System gelöscht wird.

Entsprechend Figur 1 wird das Automatisierungsgerät 100 bei einer erstmaligen Inbetriebnahme an das erste Teilnetz 201 angeschlossen und erhält eine entsprechende Subnetz-Zuordnung. Bei einer erstmaligen Inbetriebnahme sind in den DNS-Servern 301, 302 für das Automatisierungsgerät 100 entweder überhaupt keine Kommunikationsnetzadressen oder nur eine soeben registrierte Kommunikationsnetzadresse N gespeichert. Eine Replikation zwischen einem primären DNS-Server 301 und einem sekundären DNS-Server 302 dauert üblicherweise einige Minuten, so dass die Kommunikationsnetzadresse N des Automatisierungsgeräts 100 beim sekundären DNS-Server 302 dementsprechend später abgefragt werden kann.

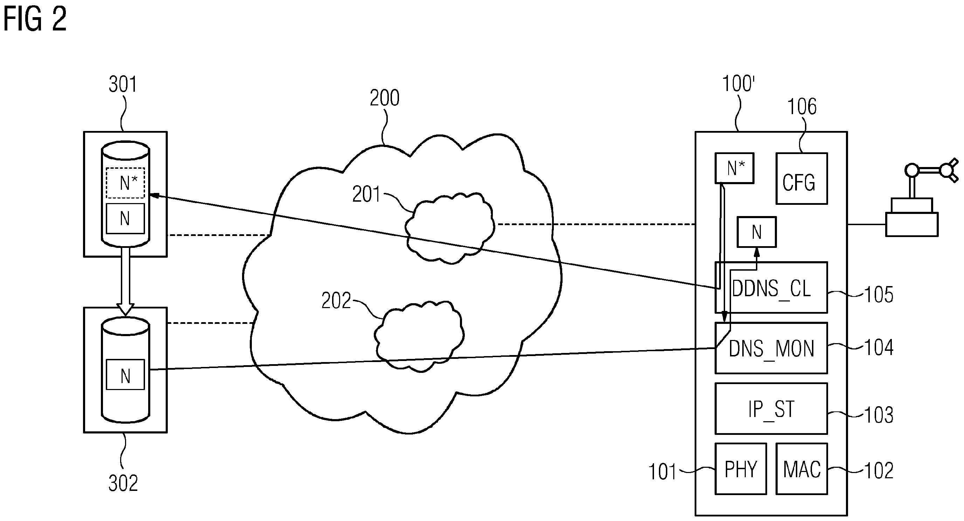

Bei einem in Figur 2 angedeuteten Austausch des Automatisierungsgeräts 100 durch ein Ersatz-Automatisierungsgerät 100' fragt dieses bei den DNS-Servern 301, 302 die Kommunikationsnetzadresse N ab, die zuvor dem ausgetauschten Automatisierungsgerät 100 zugeordnet war. Allgemein fragen Ersatz-Automatisierungsgeräte entsprechend dem vorliegenden Ausführungsbeispiel im Rahmen eines Gerätetauschs bei den DNS-Servern 301, 302 ab, welche Kommunikationsnetzadressen ihrem jeweiligen Kommunikationsgerätnamen zugeordnet sind, da Kommunikationsgerätnamen bzw. logische Gerätenamen unverändert vom ausgetauschten Automatisierungsgerät übernommen werden.

Das Ersatz-Automatisierungsgerät 100' generiert seine Kommunikationsnetzadresse N* analog zu vorangehenden Ausführungen per SLAAC selbst. Da Ersatz-Automatisierungsgerät 100' eine andere Gerätehardware als das ausgetauschte Automatisierungsgerät 100 aufweist, sind die Kommunikationsnetzadresse N* des Ersatz-Automatisierungsgeräts 100' und die Kommunikationsnetzadresse N des ausgetauschten Automatisierungsgeräts 100 nicht identisch. Insbesondere bei mehrfach verwendeten Serienmaschinen mit gleichartiger Konfiguration ist dies unumgänglich, damit eine individuelle Geräteidentifizierung möglich bleibt.

Bei einem schnellen Geräteaustausch ist in den DNS-Servern 301, 302 häufig noch die Kommunikationsnetzadresse N des ausgetauschten Automatisierungsgeräts 100 gespeichert, wenn das Ersatz-Automatisierungsgerät 100' in Betrieb genommen wird. Insbesondere im sekundären DNS-Server 302 sind veraltete Adressinformationen noch länger gespeichert. Aufgrund dessen können andere Automatisierungs- oder Kommunikationsgeräte einen Gerätetausch unter Umständen nicht hinreichend schnell erkennen, weil neue Adressinformationen erst durch das Domain Name System verteilen müssen.

Da das Ersatz-Automatisierungsgerät 100' identisch wie das ausgetauschte Automatisierungsgerät 100 ausgestaltet und eingerichtet ist, sind dem ausgetauschten Automatisierungsgerät 100 zugeordnete, grundsätzlich veraltete Adressinformationen auch für Kommunikation mit dem Ersatz-Automatisierungsgerät 100' nutzbar. Die Kommunikationsnetzadresse N des ausgetauschten Automatisierungsgeräts 100 wird nämlich durch das Ersatz-Automatisierungsgerät 100' mittels seiner Überwachungseinheit 104 erkannt. Auf diese Weise kann sich das Ersatz-Automatisierungsgerät 100' die Kommunikationsnetzadresse N des ausgetauschten Automatisierungsgeräts 100 parallel zu seiner selbst erzeugten Kommunikationsnetzadresse N* zuordnen. Somit können andere Automatisierungs- oder Kommunikationsgeräte das Ersatz-Automatisierungsgerät 100' für eine Übergangszeit auch mit dem ausgetauschten Automatisierungsgerät 100 zugeordneten, grundsätzlich veralteten Adressinformationen erreichen.

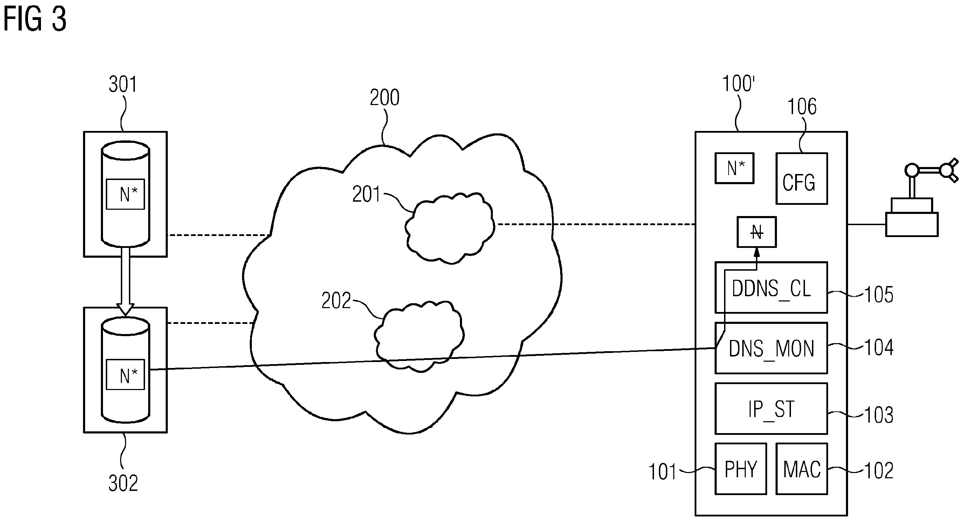

In Figur 3 ist ein Szenario für eine Adressbereinigung dargestellt, bei der veraltete Adressinformationen nach Ablauf eines vorgegebenen Gültigkeitsintervalls zunächst aus den DNS-Servern 301, 302 entfernt werden, so dass diese nicht mehr weiter an DNS-Clients verbreitet werden. Darüber hinaus ermittelt das Kommunikationsgerät des Ersatz-Automatisierungsgeräts 100' eine in den DNS-Servern 301, 302 festgelegte Gültigkeitsdauer einer Zuordnung zwischen seinem Kommunikationsgerätenamen und der Kommunikationsnetzadresse N des ausgetauschten Automatisierungsgeräts 100. Nach Ablauf der ermittelten Gültigkeitsdauer hebt die Konfigurationseinheit 106 des Ersatz-Automatisierungsgeräts 100' die Zuordnung der Kommunikationsnetzadresse N des ausgetauschten Automatisierungsgeräts 100 selbständig auf. Vorzugsweise hebt das Kommunikationsgerät die Zuordnung betroffener Kommunikationsnetzadressen erst nach Ablauf eines Vielfachen der ermittelten Gültigkeitsdauer selbständig auf. Zu diesem Zeitpunkt ist dann in keinem DNS-Server mehr ein Datensatz mit einer entsprechenden Adresszuordnung gespeichert. Vorteilhafterweise terminiert das Ersatz-Automatisierungsgerät 100' vor Aufhebung der Zuordnung der Kommunikationsnetzadresse N des ausgetauschten Automatisierungsgeräts 100 sämtliche Kommunikationsverbindungen, die von anderen Automatisierungs- oder Kommunikationsgeräten unter Verwendung veralteter Adressinformationen aufgebaut worden sind. Von einer Terminierung der Kommunikationsverbindungen betroffene Automatisierungs- oder Kommunikationsgeräte können anschließend unter Verwendung durch die DNS-Server 301, 302 bereitgestellter aktueller Adressinformationen neue Kommunikationsverbindungen mit dem Ersatz-Automatisierungsgerät 100' aufbauen.

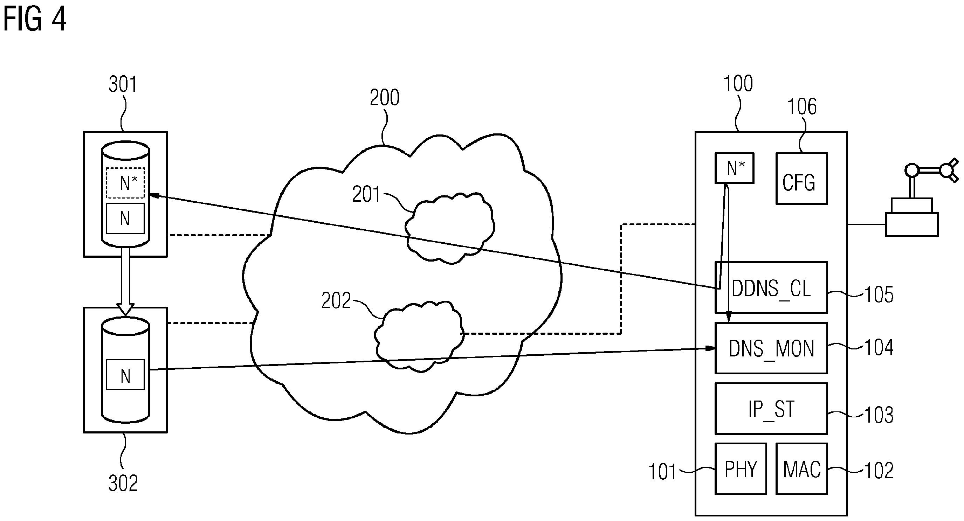

Entsprechend Figur 4 wird das Automatisierungsgerät 100 bei einem Umzug an das zweite Teilnetz 202 angeschlossen und erhält damit eine geänderte Subnetz- bzw. IPv6-Präfix-Zuordnung. Bei einem solchen Umzug ist eine weitere Verwendung zuvor zugeordneter Adressinformationen unerwünscht. Da das Kommunikationsgerät des Automatisierungsgeräts 100 bei den DNS-Servern 301, 302 abgefragte Kommunikationsnetzadressen auf eine Übereinstimmung mit dem mittels Router Advertisement übermittelten aktuellen IPv6-Präfix überprüft, kann ein Umzug von einem Gerätetausch unterschieden werden. Demzufolge unterlässt das Kommunikationsgerät bei einem Umzug bzw. einem negativen Überprüfungsergebnis eine Zuordnung abgefragter Kommunikationsnetzadressen mit abweichendem IPv6-Präfix.

## Patentansprüche

1. Verfahren zur Konfiguration eines Kommunikationsgeräts eines industriellen Automatisierungssystems, bei dem
- das Kommunikationsgerät (100') aus zumindest einem mittels Routerbekanntgabe-Nachrichten durch zumindest einen innerhalb seines Teilnetzes (201) zugeordneten Router übermittelten Präfix und aus einem geräteindividuellen Schnittstellenidentifikator selbständig eine dem Kommunikationsgerät (100') zugeordnete Kommunikationsnetzadresse (N*) erzeugt,
- das Kommunikationsgerät (100') einen Client (105) für dynamisches DNS umfasst, mittels dessen es eine Speicherung einer Zuordnung seines Kommunikationsgerätenamens zur selbständig erzeugten Kommunikationsnetzadresse (N*) in einem Namensdienst-System anfordert, das zumindest einen Domain Name System Server (301, 302) umfasst, der einen Namensdienst entsprechend DNS-Protokoll an DNS-Clients bereitstellt,
- das Kommunikationsgerät (100') beim Server (301) des Namensdienst-Systems entsprechend DNS-Protokoll abfragt, welche Kommunikationsnetzadressen (N) dem Kommunikationsgerätnamen des Kommunikationsgeräts (100') im Namensdienst-System zugeordnet sind,
- das Kommunikationsgerät (100') die beim Server (301) des Namensdienst-Systems abgefragten Kommunikationsnetzadressen (N) des Kommunikationsgeräts (100') auf eine Übereinstimmung mit dem durch den Router übermittelten Präfix überprüft,
- das Kommunikationsgerät (100') sich nur die beim Server (301) des Namensdienst-Systems abgefragten Kommunikationsnetzadressen (N) des Kommunikationsgeräts (100') zuordnet, die eine Übereinstimmung mit dem durch den Router übermittelten Präfix aufweisen.

2. Verfahren nach Anspruch 1,
bei dem das Kommunikationsgerät für die beim Server des Namensdienst-Systems abgefragten Kommunikationsnetzadressen eine im Namensdienst-System festgelegte Gültigkeitsdauer einer Zuordnung zwischen seinem Kommunikationsgerätenamen und der jeweiligen Kommunikationsnetzadresse ermittelt, und bei dem das Kommunikationsgerät seine Zuordnung der jeweiligen Kommunikationsnetzadresse nach Ablauf der ermittelten Gültigkeitsdauer selbständig aufhebt.

3. Verfahren nach Anspruch 2,
bei dem das Kommunikationsgerät seine Zuordnung der jeweiligen Kommunikationsnetzadresse erst nach Ablauf eines Vielfachen der ermittelten Gültigkeitsdauer selbständig aufhebt.

4. Verfahren nach einem der Ansprüche 1 bis 3,
bei dem das Kommunikationsgerät bei einem primären und/oder sekundären DNS-Server abfragt, welche Kommunikationsnetzadressen seinem Kommunikationsgerätnamen zugeordnet sind.

5. Verfahren nach einem der Ansprüche 1 bis 4,
bei dem das Kommunikationsgerät einen DNS-Monitor und/oder DNS-Client umfasst, und bei dem das Kommunikationsgerät mittels des DNS-Monitors und/oder DNS-Clients abfragt, welche Kommunikationsnetzadressen seinem Kommunikationsgerätnamen zugeordnet sind.

6. Verfahren nach einem der Ansprüche 1 bis 5,
bei dem im Namensdienst-System bei einer erfolgreichen Anforderung der Speicherung der Zuordnung des Kommunikationsgerätenamens zur jeweiligen Kommunikationsnetzadresse ein die Zuordnung umfassender Datensatz angelegt wird.

7. Verfahren nach Anspruch 6,
bei dem die Kommunikationsnetzadresse eine IPv6-Adresse ist, und bei dem der Datensatz ein AAAA Resource Record ist, der nach Ablauf seiner festgelegten Gültigkeitsdauer aus dem Namensdienst-System gelöscht wird.

8. Verfahren nach einem der Ansprüche 1 bis 7,
bei dem das mittels Routerbekanntgabe-Nachrichten übermittelte Präfix ein IPv6-Präfix ist, und bei dem das Kommunikationsgerät seine zugeordnete Kommunikationsnetzadresse entsprechend Stateless Address Autoconfiguration erzeugt.

9. Verfahren nach einem der Ansprüche 1 bis 8,
bei dem das Kommunikationsgerät vor einer selbständigen Zuordnung von Kommunikationsgeräteadressen eine Eindeutigkeitsprüfung zumindest innerhalb seines Teilnetzes durchführt, und bei dem das Kommunikationsgerät sich nur eindeutige Kommunikationsgeräteadressen zuordnet.

10. Verfahren nach Anspruch 9,
bei dem das Kommunikationsgerät die Eindeutigkeitsprüfung entsprechend Neighbour Discovery Protocol durchführt.

11. Verfahren nach einem der Ansprüche 1 bis 10,
bei dem das Kommunikationsgerät ein Ersatz-Kommunikationsgerät für ein ausgetauschtes Kommunikationsgerät ist, und bei dem die durch das Ersatz-Kommunikationsgerät beim Server des Namensdienst-Systems abgefragten Kommunikationsnetzadressen zuvor dem ausgetauschten Kommunikationsgerät zugeordnet waren.

12. Verfahren nach einem der Ansprüche 1 bis 11,
bei dem das Kommunikationsgerät im Rahmen eines Gerätetauschs beim Server des Namensdienst-Systems abfragt, welche Kommunikationsnetzadressen seinem Kommunikationsgerätnamen zugeordnet sind.

13. Verfahren nach einem der Ansprüche 1 bis 12,
bei dem das Kommunikationsgerät ein Automatisierungsgerät umfasst oder in ein Automatisierungsgerät integriert ist.

14. Kommunikationsgerät für ein industrielles Automatisierungssystem zur Durchführung eines Verfahrens nach einem der Ansprüche 1 bis 13 mit
- zumindest einer Sende- und Empfangseinheit (101),
- zumindest einer Steuerungseinheit (102) zur Koordination eines Zugriffs auf ein Kommunikationsmedium,
- einer Konfigurationseinheit (106) zur selbständigen Erzeugung einer dem Kommunikationsgerät (100') zugeordnete Kommunikationsnetzadresse (N*) aus zumindest einem mittels Routerbekanntgabe-Nachrichten übermittelten Präfix und aus einem geräteindividuellen Schnittstellenidentifikator,
- einem Client (105) für dynamisches DNS, der dafür ausgestaltet und eingerichtet ist, eine Speicherung einer Zuordnung eines Kommunikationsgerätenamens des Kommunikationsgeräts (100') zur selbständig erzeugten Kommunikationsnetzadresse (N*) in einem Namensdienst-System anzufordern, wobei das Namensdienst-System zumindest einen Domain Name System Server (301, 302) zur Bereitstellung eines Namensdienstes entsprechend DNS-Protokoll an DNS-Clients umfasst,
- einer Überwachungseinheit (104) zur Abfrage beim Server (301) des Namensdienst-Systems entsprechend DNS-Protokoll, welche Kommunikationsnetzadressen (N) dem Kommunikationsgerätnamen des Kommunikationsgeräts (100') im Namensdienst-System zugeordnet sind,
- wobei das Kommunikationsgerät (100') dafür ausgestaltet und eingerichtet ist, dass die die beim Server (301) des Namensdienst-Systems abgefragten Kommunikationsnetzadressen (N) des Kommunikationsgeräts (100') auf eine Übereinstimmung mit dem übermittelten Präfix überprüft werden,
- wobei das Kommunikationsgerät (100') dafür ausgestaltet und eingerichtet ist, dass es sich nur die beim Server (301) des Namensdienst-Systems abgefragten Kommunikationsnetzadressen (N) des Kommunikationsgeräts (100') zuordnet, die eine Übereinstimmung mit dem durch den Router übermittelten Präfix aufweisen.

## Claims

1. Method for the configuration of a communication device of an industrial automation system, in which
- the communication device (100') independently generates a communication network address (N*) assigned to the communication device (100') from at least one prefix communicated by means of router advertisement messages by at least one router assigned within the subnetwork (201) of said communication device and from a device-specific interface identifier,
- the communication device (100') comprises a client (105) for dynamic DNS, by means of which it requests storage of an assignment of its communication device name to the independently generated communication network address (N*) in a name service system comprising at least one domain name system server (301, 302) which provides DNS clients with a name service according to the DNS protocol,
- the communication device (100') interrogates at the server (301) of the name service system, according to the DNS protocol, which communication network addresses (N) are assigned to the communication device name of the communication device (100') in the name service system,
- the communication device (100') checks the communication network addresses (N) of the communication device (100') which are interrogated at the server (301) of the name service system with regard to a correspondence to the prefix communicated by the router,
- the communication device (100') assigns to itself only those communication network addresses (N) of the communication device (100') interrogated at the server (301) of the name service system which have a correspondence to the prefix communicated by the router.

2. Method according to Claim 1,
in which the communication device determines, for the communication network addresses interrogated at the server of the name service system, a validity period - defined in the name service system - of an assignment between its communication device name and the respective communication network address, and in which the communication device independently cancels its assignment of the respective communication network address after the determined validity period has elapsed.

3. Method according to Claim 2,
in which the communication device independently cancels its assignment of the respective communication network address only after a multiple of the determined validity period has elapsed.

4. Method according to any of Claims 1 to 3,
in which the communication device interrogates at a primary and/or secondary DNS server which communication network addresses are assigned to its communication device name.

5. Method according to any of Claims 1 to 4,
in which the communication device comprises a DNS monitor and/or DNS client, and in which the communication device interrogates by means of the DNS monitor and/or DNS client which communication network addresses are assigned to its communication device name.

6. Method according to any of Claims 1 to 5,
in which a data record comprising the assignment is created in the name service system in the event of a successful request for the storage of the assignment of the communication device name to the respective communication network address.

7. Method according to Claim 6,
in which the communication network address is an IPv6 address, and in which the data record is an AAAA resource record which is erased from the name service system after its defined validity period has elapsed.

8. Method according to any of Claims 1 to 7,
in which the prefix communicated by means of router advertisement messages is an IPv6 prefix, and in which the communication device generates its assigned communication network address according to stateless address autoconfiguration.

9. Method according to any of Claims 1 to 8,
in which the communication device carries out a uniqueness check at least within its subnetwork before an independent assignment of communication device addresses, and in which the communication device assigns to itself only unique communication device addresses.

10. Method according to Claim 9,
in which the communication device carries out the uniqueness check according to the neighbour discovery protocol.

11. Method according to any of Claims 1 to 10,
in which the communication device is a replacement communication device for an exchanged communication device, and in which the communication network addresses interrogated at the server of the name service system by the replacement communication device were previously assigned to the exchanged communication device.

12. Method according to any of Claims 1 to 11,
in which the communication device interrogates in the context of a device exchange at the server of the name service system which communication network addresses are assigned to its communication device name.

13. Method according to any of Claims 1 to 12,
in which the communication device comprises an automation device or is integrated into an automation device.

14. Communication device for an industrial automation system for carrying out a method according to any of Claims 1 to 13 comprising
- at least one transmitting and receiving unit (101),
- at least one control unit (102) for coordinating access to a communication medium,
- a configuration unit (106) for independently generating a communication network address (N*) assigned to the communication device (100') from at least one prefix communicated by means of router advertisement messages and from a device-specific interface identifier,
- a client (105) for dynamic DNS which is designed and set up to request storage of an assignment of a communication device name of the communication device (100') to the independently generated communication network address (N*) in a name service system, wherein the name service system comprises at least one domain name system server (301, 302) for providing DNS clients with a name service according to the DNS protocol,
- a monitoring unit (104) for interrogating at the server (301) of the name service system, according to the DNS protocol, which communication network addresses (N) are assigned to the communication device name of the communication device (100') in the name service system,
- wherein the communication device (100') is designed and set up to the effect that the communication network addresses (N) of the communication device (100') which are interrogated at the server (301) of the name service system are checked for a correspondence to the communicated prefix,
- wherein the communication device (100') is designed and set up to the effect that it assigns to itself only those communication network addresses (N) of the communication device (100') interrogated at the server (301) of the name service system which have a correspondence to the prefix communicated by the router.

## Revendications

1. Procédé de configuration d'un appareil de communication d'un système d'automatisation industriel, dans lequel
- l'appareil (100') de communication produit, à partir d'au moins un préfixe transmis par au moins un routeur disposé à l'intérieur de son réseau (201) partiel, au moyen de messages de mise en connaissance de routeur, et à partir d'un identifiant d'interface individuel à l'appareil, automatiquement une adresse (N*) dans le réseau de communication associée à l'appareil (100')de communication,
- l'appareil (100') de communication comprend un client (105) pour un DNS dynamique, au moyen duquel il requiert une mise en mémoire d'une association de sa dénomination d'appareil de communication à l'adresse (N*) dans le réseau de communication produite automatiquement dans un système de service de dénomination, qui comprend au moins un domaine name system server (301, 302), qui met à disposition un service de dénomination correspondant au protocole DNS au client DNS,
- l'appareil (100') de communication demande, dans le serveur (301) du système de service de dénomination conformément au protocole DNS, les adresses (N) dans le réseau de communication, qui sont associées à la dénomination de l'appareil (100') de communication dans le système de service de dénomination,
- l'appareil (100') de communication contrôle que les adresses (N) de communication, demandées dans le serveur (301) du système de service de dénomination, de l'appareil (100') de communication, ont une coïncidence avec le préfixe transmis par le routeur,
- l'appareil (100') de communication n'associe que les adresses (N) dans le réseau de communication, demandées dans le serveur (301) du système de service de dénomination, de l'appareil (10') de communication, qui ont une coïncidence avec le préfixe transmis par le routeur.

2. Procédé suivant la revendication 1,
dans lequel l'appareil de communication détermine, pour les adresses dans le réseau de communication, demandées dans le serveur du système de service de dénomination, une durée de validité, fixée dans le système de service de dénomination, d'une association entre sa dénomination d'appareil de communication et l'adresse respective dans le réseau de communication, et dans lequel l'appareil de communication supprime automatiquement son association à l'adresse respective dans le réseau de communication après écoulement de la durée de validité, qui a été déterminée.

3. Procédé suivant la revendication 2,
dans lequel l'appareil de communication supprime automatiquement son association à l'adresse respective dans le réseau de communication seulement après l'écoulement d'un multiple de la durée de validité, qui a été déterminée.

4. Procédé suivant l'une des revendications 1 à 3,
dans lequel l'appareil de communication demande, dans un serveur DNS primaire et/ou secondaire, les adresses dans le réseau de communication, qui sont associées à sa dénomination d'appareil de communication.

5. Procédé suivant l'une des revendications 1 à 4,
dans lequel l'appareil de communication comprend un moniteur DNS et/ou un client DNS, et dans lequel l'appareil de communication demande, au moyen du moniteur DNS et/ou du client DNS, les adresses dans le réseau de communication, qui sont associées à sa dénomination d'appareil de communication.

6. Procédé suivant l'une des revendications 1 à 5,
dans lequel on met, dans le système de service de dénomination, lors d'une demande couronnée de succès de la mise en mémoire de l'association de la dénomination de l'appareil de communication à l'adresse respective dans le réseau de communication, un ensemble de données comprenant l'association.

7. Procédé suivant la revendication 6,
dans lequel l'adresse dans le réseau de communication est une adresse IPv6, et dans lequel l'ensemble de données est un AAAA resource record, qui, après l'expiration de sa durée de validation, qui a été fixée, est effacé du système de service de dénomination.

8. Procédé suivant l'une des revendications 1 à 7,
dans lequel le préfixe transmis au moyen de messages de mise en connaissance de routeur est un préfixe IPv6, et dans lequel l'appareil de communication produit son adresse associée dans le réseau de communication conformément à stateless address autoconfiguration.

9. Procédé suivant l'une des revendications 1 à 8,
dans lequel l'appareil de communication effectue, au moins dans son réseau partiel, avant une association automatique des adresses d'appareil de communication, un contrôle d'univocité, et dans lequel l'appareil de communication ne s'associe qu'à des adresses univoques d'appareil de communication.

10. Procédé suivant la revendication 9,
dans lequel l'appareil de communication effectue le contrôle d'univocité conformément à neighbour discovery protocol.

11. Procédé suivant l'une des revendication 1 à 10,
dans lequel l'appareil de communication est un appareil de communication de remplacement d'un appareil de communication remplacé, et dans lequel les adresses, dans le réseau de communication demandées dans le serveur du système de service de dénomination par l'appareil de communication de remplacement, sont associées auparavant à l'appareil de communication remplacé.

12. Procédé suivant l'une des revendications 1 à 11,
dans lequel l'appareil de communication demande, dans le cadre d'un échange d'appareil au serveur du système de service de dénomination, les adresses dans le réseau de communication, qui sont associées à sa dénomination d'appareil de communication.

13. Procédé suivant l'une des revendications 1 à 12,
dans lequel l'appareil de communication comprend un appareil d'automatisation ou est intégré à un appareil d'automatisation.

14. Appareil de communication d'un système d'automatisation industriel pour effectuer un procédé suivant l'une des revendications 1 à 13, comprenant
- au moins une unité (101) d'émission et de réception,
- au moins une unité (102) de commande pour coordonner un accès à un support de communication,
- une unité (106) de configuration pour produire automatiquement une adresse (N*) dans le réseau de communication associée à l'appareil (100') de communication à partir d'au moins un préfixe transmis au moyen de messages de mise en connaissance de routeur et à partir d'un identifiant d'interface individuel à l'appareil,
- un client (105) pour un DNS dynamique, qui est conformé et conçu pour requérir une mise en mémoire d'une association d'une dénomination d'appareil de communication de l'appareil (100') de communication à l'adresse (N*) dans le réseau de communication produite automatiquement dans un système de service de dénomination, le système de service de dénomination comprenant au moins un domain name system server (301, 302) de mise à disposition d'un service de dénomination conformément à DNS protocol au client DNS,
- une unité (104) de contrôle pour demander, dans le serveur (301) du système de service de dénomination conformément au protocole DNS, les adresses (N) dans le réseau de communication, qui sont associées à la dénomination d'appareil de communication, de l'appareil (100') de communication dans le système de service de dénomination,
- dans lequel l'appareil (100') de communication est conformé et conçu pour contrôler que les adresses (N) dans le réseau de communication, demandées dans le serveur (301) du système de service de dénomination, de l'appareil (100') de communication, ont une coïncidence avec le préfixe transmis,
- dans lequel l'appareil (100') de communication est conformé et conçu pour n'associer que les adresses (N) dans le réseau de communication, demandées dans le serveur (301) du système de service de dénomination, de l'appareil (100') de communication, qui ont une coïncidence avec le préfixe transmis par le routeur.
